# EUROPEAN PATENT APPLICATION

(11) **EP 2 019 230 A1**
(43) Date of publication of application: **28.01.2009**
(21) Application number: 07425458.2
(22) Date of filing: 25.07.2007
(51) Int. Cl.: F16H 3/08, F16H 61/02, F16H 61/30, F16H 61/682

(54) **Servo-assisted mechanical gearbox with hydraulic actuation of the synchronizers**

(71) Applicant: MAGNETI MARELLI POWERTRAIN S.p.A., 20011 Corbetta (MI) (IT)
(72) Inventor: Sola, Cesare, 10087 Valperga (IT); Amisano, Fabrizio, 10144 Torino (IT); Medico, Giuseppe, 10098 Rivoli (IT)
(74) Representative: Bergadano, Mirko

(57) **Abstract**

A servo-assisted mechanical gearbox (1) presenting: a first shaft (5); a second shaft (7); a plurality of gear pairs (10, 11), each of which mechanically couples the first shaft (5) to the second shaft (7), defines a corresponding speed and comprises a first gear (10) idly mounted on the first shaft (5) and a second gear (11) which is rigidly mounted on the second shaft (7) and permanently meshes with the first gear (10); a plurality of synchronizers (12), each of which is mounted coaxially to the first shaft (5) between two first gears (10) and is adapted to be actuated to alternatively engage the two first gears (10) to the first shaft (5); and a hydraulic actuation system (13) comprising for each synchronizer (12) a corresponding hydraulic servo-control (14), which is adapted to displace the synchronizer (12) alternatively in the two senses along the first shaft (5) and comprises two opposing chambers (17) adapted to be filled with a pressurized control fluid and a piston (18) which is slidingly mounted inside the two chambers (17) and is mechanically connected to the synchronizer (12).

## Description

### TECHNICAL FIELD

The present invention relates to a servo-assisted mechanical gearbox.

### BACKGROUND ART

A mechanical gearbox generally comprises a primary shaft which receives motion from a drive shaft of an internal combustion engine by means of the interposition of a clutch, and a secondary shaft which transmits the motion to the drive wheels. The primary shaft and the secondary shaft are reciprocally and mechanically coupled by means of a plurality of gear pairs, each of which defines a corresponding speed and comprises a primary gear mounted on the primary shaft and a secondary gear mounted on the secondary shaft.

According to a possible embodiment, each primary gear is rigidly mounted on the primary shaft in order to integrally rotate with the primary shaft itself and constantly meshes with the corresponding secondary gear; each secondary gear is instead idly mounted on the secondary shaft and is provided with its own synchronizer, which is adapted to be actuated to engage the secondary gear onto the secondary shaft (i.e. to make the secondary gear integral with the secondary shaft). In order to reduce the number of gearbox components, each synchronizer is coaxially mounted with respect to the secondary shaft between two secondary gears so as either to be displaced in one sense to engage a secondary gear onto the secondary shaft or to be displaced in the other sense to engage the other secondary gear onto the secondary shaft. In order to actuate the synchronizers there are provided a plurality of forks, each of which envelops a corresponding synchronizer to alternatively displace the synchronizer itself in the two senses along the secondary shaft. Alternatively, the secondary gears could be rigidly mounted on the secondary shaft while the primary gears could be idly mounted on the primary shaft; in this case, the synchronizers are mounted on the primary shaft to engage the primary gears onto the primary shaft itself.

During a gear shift, once the clutch has been opened to disconnect the primary shaft from the drive shaft, the synchronizer of the secondary gear of the current speed is actuated to disengage the secondary gear of the current speed from the secondary shaft and thus the synchronizer of the secondary gear of the subsequent speed is actuated to engage the secondary gear of the next speed onto the secondary shaft. In a currently marketed mechanical gearbox, the gear pairs corresponding to consecutive speeds are arranged reciprocally side-by-side and share a same synchronizer; thus frequently a same synchronizer must be activated both to disengage the secondary gear of he current speed from the secondary shaft and to engage the secondary gear of the next speed onto the secondary shaft. However, in this case, the gear shift is relatively slow because before starting to engage the secondary gear of the next speed onto the secondary shaft it is necessary to wait for the secondary gear of the current speed to be fully disengaged from the secondary shaft.

In order to attempt to reduce the required gear shift time, it has been suggested to arrange the gears so that the two gears of two consecutive speeds are engaged by two different synchronizers, and to use an actuation system which allows an independent actuation of the synchronizers. In this manner, during a gear shift, while one synchronizer disengages the gear of the current speed, another synchronizer may simultaneously engage the gear of the next speed; thus, the current speed disengagement operation (i.e. disengagement of the secondary gear of the current speed from the secondary shaft) and the next speed engagement operation (i.e. engagement of the secondary gear of the next speed onto the secondary shaft) are simultaneously performed with an evident reduction in the total gear shift operation time.

In the marketed servo-assisted gearboxes of the above-described type, the actuation system of the synchronizers is of hydraulic type and contemplates for each synchronizer a corresponding two-way hydraulic actuator, which transmits the motion to a synchronizer fork by means of a rod integral with a piston which is slidingly mounted within an auxiliary hydraulic cylinder to define the separation wall between two chambers which may be alternatively filled with a pressurized control fluid by means of a three-way solenoid valve. However, in the marketed servo-assisted gearboxes of the above-described type, the hydraulic actuation system presents a complex, expensive and cumbersome hydraulic circuit, and above all does not allow to reach neither a fast actuation speed, nor high accuracy in taking a synchronizer to an intermediate idle position at the end of a speed disengagement.

### DISCLOSURE OF INVENTION

It is the object of the present invention to make a mechanical servo-assisted gearbox which is free from the above-described drawbacks and which is easy and cost-effective to make.

According to the present invention, a mechanical servo-assisted gearbox is made as recited in the accompanying claims.

### BRIEF DESCRIPTION OF THE DRAWINGS

The present invention will now be described with reference to the accompanying drawings, which illustrate some non-limitative embodiments thereof, in which:
- figure 1 is a diagrammatic view of a mechanical servo-assisted gearbox made according to the present invention;
- figure 2 is a diagrammatic view of a hydraulic actuation system of the mechanical servo-assisted gearbox in figure 1;
- figure 3 is a diagrammatic view of a different embodiment of the hydraulic actuation system in figure 2; and
- figure 4 is a diagrammatic view of a further embodiment of the hydraulic actuation system in figure 2.

### PREFERRED EMBODIMENT OF THE INVENTION

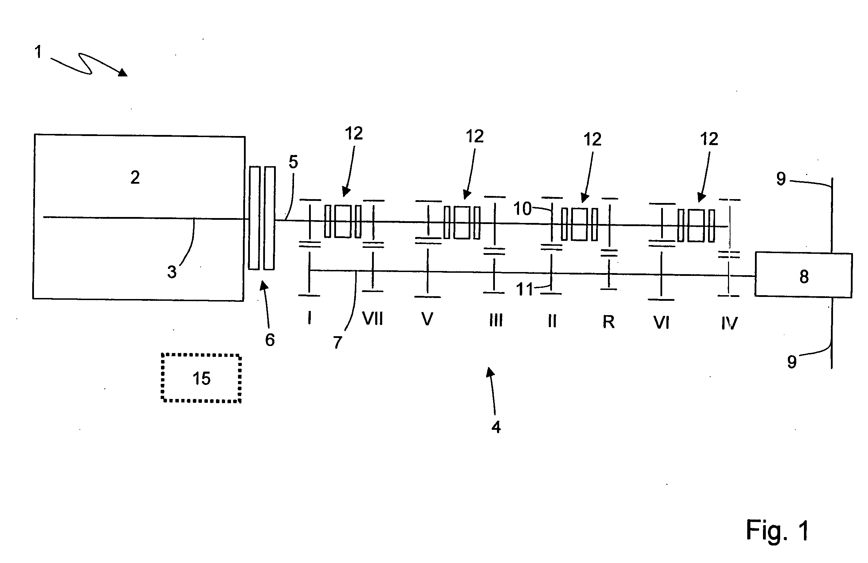

In figure 1, numeral 1 indicates as a whole a servo-assisted transmission for a car propelled by an internal combustion engine 2, which is provided with a drive shaft 3 which rotates at an angular speed Mm.

The servo-assisted transmission 1 comprises a servo-assisted mechanical gearbox 4, which is provided with a primary shaft 5 with rotates at an angular speed ω₁ and is connectable to the drive shaft 3 by means of a servo-assisted clutch 6, and with a secondary shaft 7 which rotates at an angular speed ω₂ and is connected to a differential 8 which transmits the motion to the drive wheels by means of two axle shafts 9.

The servo-assisted mechanical gearbox 4 shown in the accompanying figure presents seven forward speeds indicated by Roman numerals (first speed I, second speed II, third speed III, fourth speed IV, fifth speed V, sixth speed VI and seventh speed VII) and one reverse (indicated by the letter R). The primary shaft 5 and the secondary shaft 7 are reciprocally and mechanically coupled by means of a plurality of gear pairs, each of which defines a corresponding speed and a comprises a primary gear 10 mounted on the primary shaft 5 and a secondary gear 11 mounted on the secondary shaft 7.

Each primary gear 10 is idly mounted on the primary shaft 5 and constantly meshes with the corresponding secondary gear 11; instead, each secondary gear 11 is keyed onto the secondary shaft 7 so as to integrally rotate with the secondary shaft 7 itself. Furthermore, the servo-assisted mechanical gearbox 4 comprises four synchronizers 12, each of which is mounted coaxially to the primary shaft 5, is arranged between two primary gears 10, and is adapted to be actuated to alternatively engage the two corresponding primary gears 10 onto the primary shaft 5 (i.e. to alternatively make the two corresponding primary gears 10 angularly integral with the primary shaft 5). In other words, each synchronizer 12 may either be displaced in one sense to engage a primary gear 10 onto the primary shaft 5, or be displaced in the other sense to engage the other primary gear 10 onto the primary shaft 5.

In the mechanical gearbox 4 the primary gears 10 (i.e. the gear pairs) of two consecutive speeds are arranged so as to be engaged by two different synchronizers 12; in other words, the primary gears 10 of two consecutive speeds (e.g. I and II, II and III, III and IV, or IV and V, etc.) are actuated by two different synchronizers 12. For example, the following gear pairs combinations may be contemplated in which the secondary gears are engaged by a same synchronizer 12: I and VII, V and III, II and R, VI and IV.

It is worth underlining that the synchronizers 12 either may all be mounted coaxially to the primary shaft 5 (i.e. all the primary gears 10 are idly mounted on the primary shaft 5 and are alternatively engaged onto the primary shaft 5 itself by the synchronizers 12), or may all be mounted coaxially to the secondary shaft 7 (i.e. all the secondary gears 11 are idly mounted on the secondary shaft 7 and are alternatively engaged onto the secondary shaft 7 itself by the synchronizers 12), or may be mounted coaxially both to the primary shaft 5 and to the secondary shaft 7 (i.e. some primary gears 10 are idly mounted on the primary shaft 5 and some secondary gears 11 are idly mounted on the secondary shaft 7).

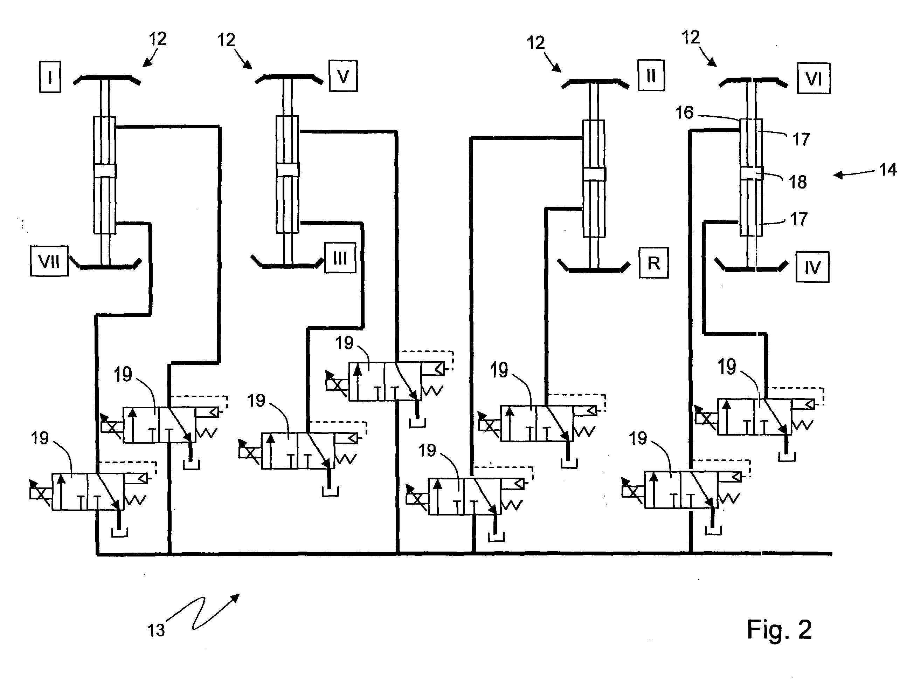

As shown in figure 2, the mechanical servo-assisted gearbox 4 is actuated by a hydraulic actuation system 13 which mechanically drives the synchronizers 12 so as to engage and disengage the gears; specifically, for each synchronizer 12 the hydraulic actuation system 13 comprises a corresponding hydraulic servo-control 14, which is mechanically connected to the synchronizer 12 to displace the synchronizer 12 itself in the two senses. Also the servo-assisted clutch 6 is actuated by a hydraulic servo-control (not shown) to connect and disconnect the drive shaft 3 to/from the primary shaft 5. The servo-assisted transmission 1 comprises an electronic control unit 15 (diagrammatically shown), which drives the hydraulic servo-controls 14 of the servo-assisted mechanical gearbox 4 and the hydraulic servo-control of the servo-assisted clutch 6.

Each hydraulic servo-control 14 is adapted to displace a corresponding synchronizer 12 alternatively in the two senses along the primary shaft 5 to make the synchronizer 12 itself assume three positions: a first end position in which the synchronizer 12 engages a primary gear 10 onto the primary shaft 5, an intermediate idle position in which both primary gears 10 are disengaged from the primary shaft 5, and a second end position which is opposite to the first end position and in which the synchronizer 12 engages the other primary gear 10 onto the primary shaft 5. Each hydraulic servo-control 14 comprises a hydraulic cylinder 16 inside which there are defined two opposing chambers 17, which are reciprocally divided by a piston 18 slidingly mounted inside the hydraulic cylinder 16 and mechanically connected to the synchronizer 12. According to an embodiment, the hydraulic actuation system 13 comprises for each synchronizer 12 a corresponding fork, which is mechanically coupled both to the synchronizer 12 and to the piston 18 of the corresponding hydraulic servo-control 14; normally, each piston 18 may be connected to the fork by means of a rigid transmission rod.

The two chambers 17 of each hydraulic servo-control 14 are hydraulically controlled by two corresponding two-way proportioning solenoid valves 19, which are adapted to fill the two chambers 17 with a pressurized control fluid to push the piston 18 in the two directions. Specifically, each solenoid valve is adapted to connect the corresponding chamber 17 with a pressurized control fluid accumulator so as to feed the pressurized control fluid to the chamber 17, is adapted to connect the chamber 17 to an ambient pressure control fluid reservoir so as to discharge the pressurized control fluid from the chamber 17, and is adapted to maintain the chamber 17 isolated so as to maintain the quantity of control fluid present in the chamber 17 constant.

It is important observing that each hydraulic servo-control 14 is adapted to use two reciprocally independent solenoid valves 19, each of which is adapted to fill a corresponding chamber 17 of the hydraulic servo-control 14 with pressurized control fluid independently from the other solenoid valve 19.

According to the embodiment shown in figure 2, the hydraulic actuation system 13 comprises two solenoid valves 19, which are permanently connected to the hydraulic servo-control 14 itself, for each hydraulic servo-control 14.

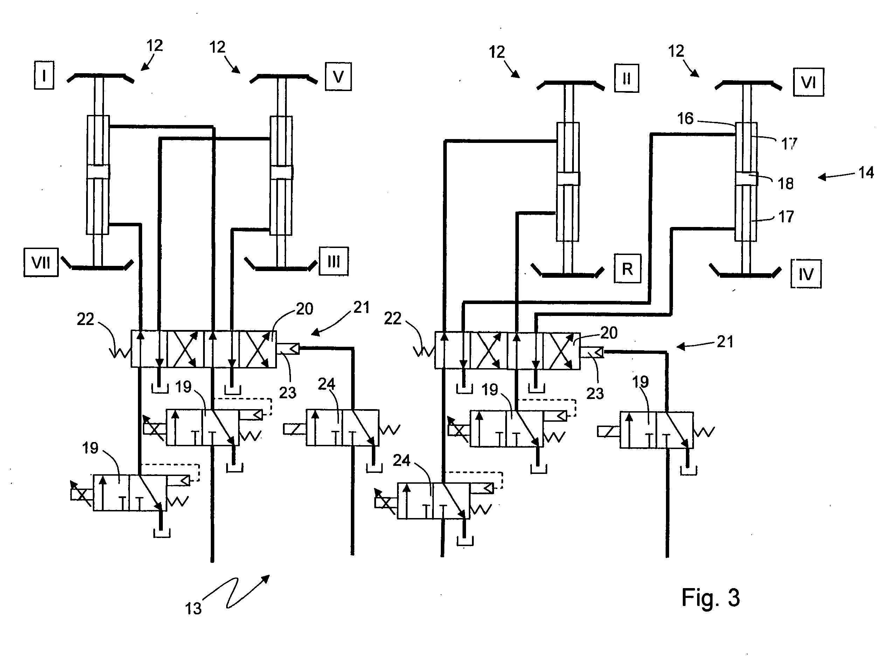

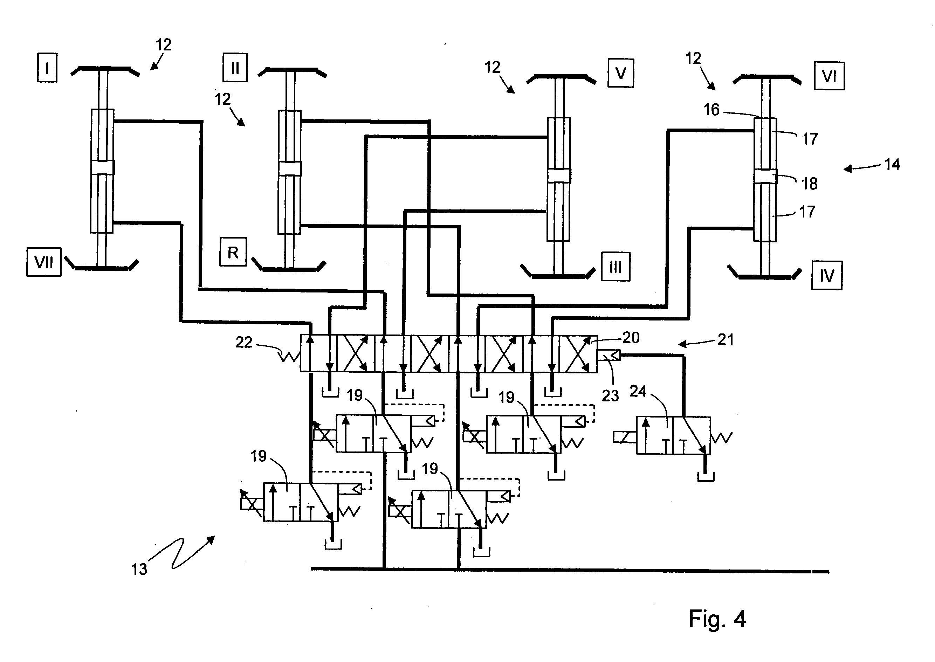

According to the embodiment shown in figures 3 and 4, the hydraulic actuation system 13 comprises a pair of solenoid valves 19, which are shared by two hydraulic servo-controls 14, and a slide valve 20, which is adapted to alternatively connect the two solenoid valves 19 to each of the two hydraulic servo-controls 14, for each pair of hydraulic servo-control 14.

In the variant of figure 3, the hydraulic actuation system 13 comprises two pairs of hydraulic servo-controls 14, two pairs of solenoid valves 19 each of which is shared by a corresponding pair of hydraulic servo-controls 14, and two reciprocally independent slide valves 20, each of which is connected to the two solenoid valves 19 of a corresponding pair of hydraulic servo-controls 14. In the variant of figure 4, instead, the hydraulic actuation system 13 comprises two pairs of hydraulic servo-controls 14, two pairs of solenoid valves 19 each of which is shared by a corresponding pair of hydraulic servo-controls 14, and a single slide valve 20, connected to the four solenoid valves 19 of the two pairs of hydraulic servo-controls 14.

Normally, each slide valve 20 comprises its own auxiliary hydraulic servo-control 14, which comprises an elastic element 22 which pushes the slide valve 20 into a first position and an auxiliary hydraulic cylinder 23 adapted to push the slide valve 20 into a second position opposite to the first position against the bias exerted by the elastic element 22. Each auxiliary hydraulic cylinder 23 comprises a single chamber in which a piston mechanically connected to the slide valve 20 slides and which is adapted to be filled with a pressurized control fluid by means of an auxiliary solenoid valve 24.

It is apparent that the embodiments shown in figures 3 and 4 are simplified alternatives and are more cost-effective and more compact than the embodiment shown in figure 2; in other words, in order to reduce the number of solenoid valves 19, it is accepted to share a reduced number of solenoid valves 19 among the hydraulic servo-controls 14 by means of one or two slide valves 20. Obviously, given a greater cost-effectiveness, the embodiments shown in figures 3 and 4 present poorer performances due to the need to also drive the slide valves 20. It is important underlining that in the embodiment shown in figure 3, it is possible to perform all the gear shifts between two consecutive speeds without needing to drive the slide valves 20 during the gear shift, but possibly only before starting the gear shift; instead, in the embodiment shown in figure 4, it is necessary to drive the slide valve 20 during some gear shifts between two consecutive speeds.

The operation of the servo-assisted transmission 1 is described below.

During a gear shift from a current speed to a next speed consecutive to the current speed, the actuation system 13 actuates, in reciprocally independent manner, the synchronizers 12 of the primary gear 10 of the current speed and of the primary gear 10 of the next speed; in this manner, during a gear shift from a current speed to a next speed consecutive to the current speed, the actuation system actuates the synchronizer 12 of the primary gear 10 of the current speed to disengage the primary gear 10 of the current speed itself from the primary shaft 5 and simultaneously actuates the synchronizer 12 of the primary gear 10 of the next speed to engage the primary gear 10 of the next speed itself onto the primary shaft 5.

In other words, while the synchronizer 12 of the primary gear 10 of the current speed is actuated to disengage the primary gear 10 of the current speed itself from the primary shaft 5, the synchronizer 12 of the primary gear 10 of the next speed is actuated to engage the primary gear 10 of the next speed itself onto the primary shaft 5; in this manner, the current speed disengagement operation (i.e. disengagement of the primary gear 10 of the current speed from the primary shaft 5) and next speed engagement operation (i.e. engagement of the primary gear 10 of the next speed onto the primary shaft 5) are simultaneously performed with an evident reduction of the total gear shift operation time. The simultaneousness of the current speed disengagement operation and of the next speed engagement operation may be adjusted (i.e. increased or decreased) with appropriate advances or delays to reduce the gear shift times in favor of sportiness and to the detriment of comfort, or vice versa. In other words, for an extremely fast (thus very sporty and potentially not very comfortable) gear shift, the current speed disengagement operation and the next speed engagement operation may be completely simultaneous; in this situation, it may occur that for a certain period of time (normally very short) both the gears are engaged with consequent clashes of gears to the detriment of comfort (clashes of gears are very noisy and may cause longitudinal vibrations on the vehicle). Instead, for a slower (thus less sporty but more comfortable) gear shift, the simultaneousness of the current speed disengagement operation and of the next speed engagement operation may be reduced (i.e. the engagement of the next speed is delayed with respect to the disengagement of the current speed); in this situation, it is very likely that for a determined period of time (normally short) both the gears are disengaged.

The simultaneousness between the current speed disengagement operation and the next speed engagement operation is made possible by the fact that the primary gears 10 (i.e. the gear pairs) of two consecutive speeds are arranged so as to be engaged by two different synchronizers 12 and that the actuation system 13 allows to actuate the synchronizers 12 in a reciprocally independent manner.

In order to disengage a current speed, the actuation system 13 actuates the synchronizer 12 of the primary gear 10 of the current speed to disengage the primary gear 10 of the current speed itself from the primary shaft 5; in order to actuate the synchronizer 12 of the primary gear 10 of the current speed, the actuation system 13 drives the corresponding hydraulic servo-control 14 by filling a chamber 17 of the hydraulic servo-control 14 with pressurized control fluid so as to displace the synchronizer 12 towards an intermediate idle position and fills the other chamber 17 of the hydraulic servo-control 14 with pressurized control fluid so as to brake the movement of the synchronizer 12 in proximity of the desired intermediate idle position.

In other words, in virtue of the fact that the two chambers 17 of each hydraulic servo-control 14 are hydraulically connectable to two different, independent solenoid valves 19, it is possible to simultaneously fill both chambers 17 of a same hydraulic servo-control 14 with pressurized control fluid; in this manner, during the disengagement of a gear, both the chambers 17 of the hydraulic servo-control 14 of the corresponding synchronizer 12 are used to make the synchronizer 12 itself rapidly and accurately reach the desired intermediate idle position. In practice, one chamber 17 of the hydraulic servo-control 14 is initially filled with pressurized control fluid so as to rapidly displace the synchronizer 12 (i.e. the piston 18 mechanically connected to the synchronizer 12) towards the desired idle intermediate position, while subsequently (or even simultaneously) also the other chamber 17 of the hydraulic servo-control 14 is filled with pressurized control fluid to rapidly brake the stroke of the synchronizer 12 (i.e. the piston 18 mechanically connected to the synchronizer 12) in proximity of the desired idle intermediate position.

A similar mode of driving the hydraulic servo-controls 14 may further be use to engage the next speed, i.e. to engage a primary gear 10 onto the primary shaft 5 by means of the corresponding synchronizer 12, a chamber 17 of the corresponding hydraulic servo-control 14 is used to accelerate the synchronizer 12 towards the desired end position while the other chamber 17 of the corresponding hydraulic servo-control 14 is used to brake the synchronizer 12 in proximity of the desired end position. It is worth mentioning that the use of the other chamber 17 for braking the stroke of the synchronizer 12 in proximity of the desired end position is very useful in the case an intermediate idle position must be reached, which obviously cannot present any mechanical stopper, while it is less useful in the case an end position must be reached, which naturally presents a mechanical stopper.

In the embodiment shown in figure 2, each hydraulic servo-control 14 is always connected to the corresponding solenoid valves 19; instead, in the embodiments shown in figures 3 and 4, the slide valves 20 must be appropriately driven to connect the two hydraulic servo-controls 14 concerned by a gear shift to the corresponding solenoid valves 19. Obviously, the slide valves 20 are as far as possible driven before starting a gear shift and not during a gear shift to reduce the gear shift time itself to the minimum.

The above-described servo-assisted transmission 1 presents many advantages, because it is simple and cost-effective to make and above all because it allows to obtain a very fast and particularly strong and precise control of the position of the synchronizers 12, specifically in the disengagement of the current speed in which a synchronizer 12 is taken to an intermediate idle position. Such result is obtained in virtue of the fact that each hydraulic servo-control 14 is adapted to use two reciprocally independent solenoid valves 19 so as to independently and simultaneously fill its own chambers 17 with pressurized control fluid; in this manner, a chamber 17 is used to rapidly displace a corresponding synchronizer 12 towards a desired position, while the other chamber 17 is used to brake the synchronizer 12 in proximity of the desired position.

## Claims

1. A servo-assisted mechanical gearbox (1) comprising:
a first shaft (5);
a second shaft (7);
a plurality of gear pairs (10, 11), each of which mechanically couples the first shaft (5) to the second shaft (7), defines a corresponding speed and comprises a first gear (10) mounted on the first shaft (5) and a second gear (11) which is mounted on the second shaft (7) and permanently meshes with the first gear (10);
a plurality of synchronizers (12), each of which is mounted coaxially to a shaft (5; 7) between two gears (10; 11) of two gear pairs and is adapted to be actuated to alternatively engage the two gears (10; 11) to the shaft (5; 7); and
a hydraulic actuation system (13) comprising for each synchronizer (12) a corresponding hydraulic servo-control (14), which is adapted to displace the synchronizer (12) alternatively in the two senses along the corresponding shaft (5; 7) and comprises two opposing chambers (17) adapted to be filled with a pressurized control fluid and a piston (18) which is slidingly mounted inside the two chambers (17) and is mechanically connected to the synchronizer (12);
the servo-assisted mechanical gearbox (1) is **characterized in that** each hydraulic servo-control (14) is adapted to use two reciprocally independent solenoid valves (19) each of which is adapted to fill a corresponding chamber (17) of the hydraulic servo-control (14) with pressurized control fluid independently from the other solenoid valve (19).

2. A servo-assisted mechanical gearbox (1) according to claim 1, wherein for actuating each synchronizer (12) the actuation system (13) drives the corresponding hydraulic servo-control (14) by filling one chamber (17) of the hydraulic servo-control (14) with pressurized control fluid so as to displace the synchronizer (12) towards a desired position and fills the other chamber (17) of the hydraulic servo-control (14) with pressurized control fluid to brake the movement of the synchronizer (12) in proximity of the desired position.

3. A servo-assisted mechanical gearbox (1) according to claim 1 or 2, wherein the hydraulic actuation system (13) comprises for each hydraulic servo-control (14) two solenoid valves (19), which are permanently connected to the hydraulic servo-control (14) itself.

4. A servo-assisted mechanical gearbox (1) according to claim 1 or 2, wherein the hydraulic actuation system (13) comprises for each pair of hydraulic servo-controls (14) a pair of solenoid valves (19), which are shared by the two hydraulic servo-controls (14), and a slide valve (20), which is adapted to alternatively connect the two solenoid valves (19) to each of the two hydraulic servo-controls (14).

5. A servo-assisted mechanical gearbox (1) according to claim 4, and comprising four synchronizers (12); the hydraulic actuation system (13) comprises two pairs of hydraulic servo-controls (14), two pairs of solenoid valves (19) each of which is shared by a corresponding pair of hydraulic servo-controls (14), and two reciprocally independent slide valves (20), each of which is connected to the two solenoid valves (19) of a corresponding pair of hydraulic servo-controls (14).

6. A servo-assisted mechanical gearbox (1) according to claim 5, wherein each slide valve (20) comprises its own auxiliary hydraulic servo-control (21), which comprises an elastic element (22) which pushes the slide valve (20) into a first position and an auxiliary hydraulic cylinder (23) adapted to push the slide valve (20) into a second position against the bias exerted by the elastic element (22).

7. A servo-assisted mechanical gearbox (1) according to claim 4, and comprising four synchronizers (12); the hydraulic actuation system (13) comprises two pairs of hydraulic servo-controls (14), two pairs of solenoid valves (19) each of which is shared by a corresponding pair of hydraulic servo-controls (14), and a single slide valve (20), connected to the four solenoid valves (19) of the two pairs of hydraulic servo-controls (14).

8. A servo-assisted mechanical gearbox (1) according to claim 7, wherein the slide valve (20) comprises its own auxiliary hydraulic servo-control (21), which comprises an elastic element (22) which pushes the slide valve (20) into a first position and an auxiliary hydraulic cylinder (23) adapted to push the slide valve (20) into a second position against the bias exerted by the elastic element (22).

9. A servo-assisted mechanical gearbox (1) according to one of claims from 1 to 8, wherein the gears (10; 11) of two consecutive speeds are arranged so as to be engaged by two different synchronizers (12).

10. A servo-assisted mechanical gearbox (1) according to one of claims from 1 to 9, wherein the hydraulic actuation system (13) comprises for each synchronizer (12) a corresponding fork, which is mechanically coupled both to the synchronizer (12) and to the piston (18) of the corresponding hydraulic servo-control (14).

11. A servo-assisted mechanical gearbox (1) according to one of claims from 1 to 10, wherein during a gear shift from a current speed to a next speed consecutive to the current speed, the hydraulic actuation system (13) actuates the synchronizers (12) of the gear (10; 11) of the current speed and of the gear (10; 11) of the next speed in a reciprocally independent manner.

12. A servo-assisted mechanical gearbox (1) according to one of claims from 1 to 11, wherein during a gear shift from a current speed to a next speed consecutive to the current speed, the actuation system (13) actuates the synchronizer (12) of the gear (10; 11) of the current speed to disengage the first gear (10) of the current speed itself from the first shaft (5) and simultaneously actuates the synchronizer (12) of the gear (10; 11) of the next speed to engage the first gear (10) of the next speed itself to the first shaft (5).

13. A servo-assisted mechanical gearbox (1) according to one of claims from 1 to 12, wherein the first shaft (5) is a primary shaft and is adapted to receive the motion from a drive shaft (3) of a thermal engine (2) by means of the interposition of a clutch (6), and the second shaft (7) is a secondary shaft and is adapted to transmit the motion to the drive wheels.

14. A servo-assisted mechanical gearbox (1) according to one of claims from 1 to 13, wherein each solenoid valve (19) is a two-way proportioning solenoid valve.

15. A control method of a servo-assisted mechanical gearbox (1) comprising:
a first shaft (5);
a second shaft (7);
a plurality of gear pairs (10, 11), each of which mechanically couples the first shaft (5) to the second shaft (7), defines a corresponding speed and comprises a first gear (10) mounted on the first shaft (5) and a second gear (11) which is mounted on the second shaft (7) and permanently meshes with the first gear (10);
a plurality of synchronizers (12), each of which is mounted coaxially to a shaft (5; 7) between two gears (10; 11) of two gear pairs and is adapted to be actuated to alternatively engage the two gears (10; 11) to the shaft (5; 7); and
a hydraulic actuation system (13) comprising for each synchronizer (12) a corresponding hydraulic servo-control (14), which is adapted to displace the synchronizer (12) alternatively in the two senses along the first shaft (5) and comprises two opposing chambers (17) adapted to be filled with a pressurized control fluid and a piston (18) which is slidingly mounted inside the two chambers (17) and is mechanically connected to the synchronizer (12);
to displace a synchronizer (12) of one gear (10; 11) the control method comprises the steps of:
filling a chamber (17) of the corresponding hydraulic servo-control (14) with pressurized control fluid by means of a first solenoid valve (19) to displace the synchronizer (12) to a desired position; and
filling the other chamber (17) of the corresponding hydraulic servo-control (14) with pressurized control fluid by means of a second solenoid valve (19) independent from the first solenoid valve (19) to brake the movement of the synchronizer (12) in proximity of the desired position.
